**Europäisches Patentamt**

**European Patent Office**

**Office européen des brevets**

(19)

(11) Numéro de publication: **0 230 822 B1**

(12) **FASCICULE DE BREVET EUROPEEN**

(45) Date de publication du fascicule du brevet:
02.05.90

(51) Int. Cl.⁴: **B67D 5/44,** G05D 7/03

(21) Numéro de dépôt: 86402841.0

(22) Date de dépôt: **17.12.86**

(54) **Circuit de distribution de fluide à régulation de débit.**

(30) Priorité: **20.12.85 FR 8518957**

(43) Date de publication de la demande:
**05.08.87 Bulletin 87/32**

(45) Mention de la délivrance du brevet:
**02.05.90 Bulletin 90/18**

(84) Etats contractants désignés:
**DE GB**

(56) Documents cités:
**DE-A- 3 346 000**
**FR-A- 1 444 204**
**FR-A- 2 445 177**
**GB-A- 490 515**

(73) Titulaire: **Zurak, Ivica, 5, avenue des Sapins,**
**F-95250 Beauchamp(FR)**

(72) Inventeur: **Zurak, Ivica, 5, avenue des Sapins,**
**F-95250 Beauchamp(FR)**

(74) Mandataire: **Rinuy, Santarelli, 14, avenue de la Grande**
**Armée, F-75017 Paris(FR)**

ACTORUM AG

## Description

La présente invention concerne un circuit de distribution de fluide à régulation de débit adapté à réguler le débit d'une pompe entraînant un fluide dans une canalisation en fonction du réglage d'un organe de distribution monté en aval de cette canalisation.

L'invention est notamment applicable à la distribution d'un carburant (essence, kérosène) à partir d'une citerne, par exemple portée par un camion-citerne.

On connaît déjà des dispositifs de régulation de débit du type précité, mais ceux-ci fonctionnent en tout ou rien, d'où une régulation de débit par à-coups; les dispositifs de régulation déjà connus sont généralement complexes et coûteux.

L'invention a pour objet un circuit de distribution de fluide à régulation de débit adapté à assurer, sans asservissement coûteux, une régulation progressive et continue du régime de la pompe associée, d'où un écoulement régulier de fluide.

L'invention propose ainsi un circuit de distribution de fluide comportant une pompe dont le régime est sensible à un écoulement de fluide de commande dans un moyen de réglage auquel parvient une canalisation de commande pour l'amenée de ce fluide de commande, une canalisation de distribution de fluide partant de cette pompe vers un organe de distribution et un régulateur de débit comportant dans un corps solidaire d'un tronçon de cette canalisation de fluide an aval de cette pompe, un capteur mobile de débit adapté à prendre une position variable en fonction du débit instantané de fluide dans ce tronçon, un conduit de traversée faisant partie de cette canalisation de commande en amont de cet organe de réglage un canal de fuite partant de ce conduit de traversée, et un organe mobile de régulation de fuite attelé au capteur mobile de débit et adapté à ajuster la section de passage de fluide de commande dans ce canal de fuite à un niveau variable qui est fonction de la position variable de ce capteur de débit.

Selon des dispositions préférées de l'invention, le capteur de débit et l'organe de régulation de fuite sont portés par un arbre coulissant soumis à un organe de rappel tendant à ramener l'arbre dans une position correspondant à un débit minimal et un débit de fuite maximal. Ce capteur de débit est avantageusement constitué d'un disque destiné à être disposé transversalement à l'écoulement de fluide. L'organe de régulation de fuite est de préférence un manchon porté par l'arbre, de façon avantageusement réglable, coulissant dans un alésage relié au conduit de traversée de fluide et communiquant avec le canal de fuite par des conduits radiaux décalés axialement en sorte de pouvoir être progressivement obturés par ce manchon lors de son mouvement axial.

Le diamètre du disque et la force de l'organe de rappel déterminent, en pratique, la course axiale de l'arbre coulissant tandis que le manchon est réglé axialement le long de l'arbre en sorte d'obtenir une variation du débit de fuite après une course minimale (éventuellement nulle) de l'arbre.

Selon d'autres dispositions préférées de l'invention, le canal de fuite est avantageusement raccordé à la canalisation de commande en amont du régulateur de débit. Ce régulateur est avantageusement monté sur une portion coudée de la canalisation de distribution. Le capteur de débit est avantageusement un disque adapté à s'éloigner du corps du régulateur de débit pour des débits croissants d'écoulement.

Le régulateur de débit peut aussi être engagé dans un tronçon rectiligne de canalisation, en y étant entièrement inclus.

Les objets, caractéristiques et avantages de l'invention ressortent de la description qui suit, donnée à titre d'exemple non limitatif, en regard des dessins annexés sur lesquels:

- la figure 1 est un schéma synoptique d'une installation d'alimentation en fluide mettant en oeuvre un régulateur de débit selon l'invention, et
- la figure 2 est une vue en coupe, selon l'encadré II de la figure 1, de ce régulateur de débit.

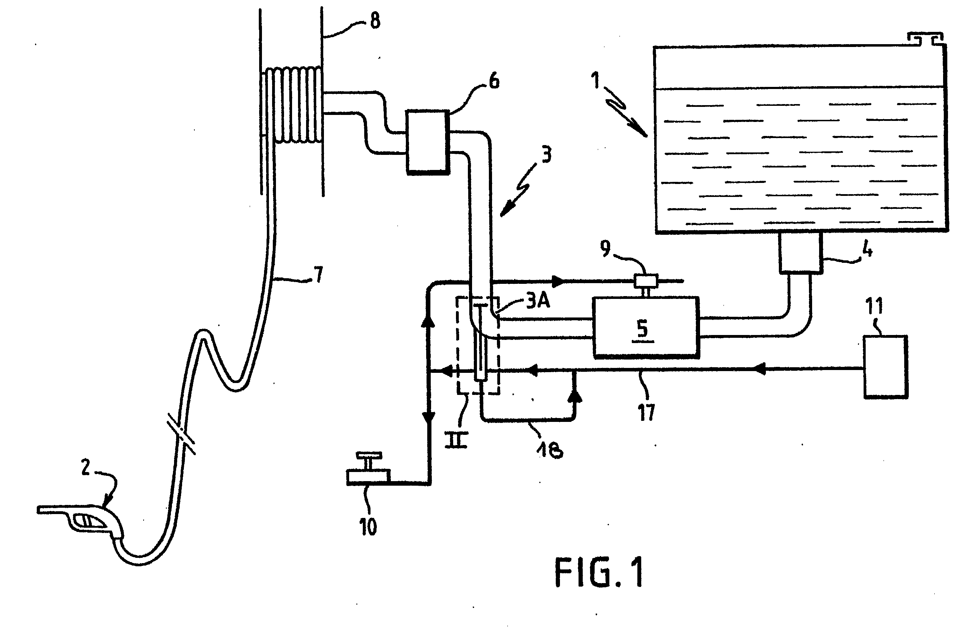

L'installation de la figure 1 comporte une citerne 1 remplie d'un fluide, de l'essence ou du kérosène par exemple, destiné à être distribué à l'aide d'un pistolet de distribution 2. Cette citerne 1 est équipée d'une canalisation 3 qui part d'un clapet 4 dont cette citerne est munie en son fond, traverse une pompe 5 associée à un moteur à combustion (au sein d'un groupe compresseur), puis un compteur 6, et est raccordée à une canalisation souple 7, enroulée sur un tambour 8, terminée par ledit pistolet 2.

Le moteur de la pompe 5 est par exemple le moteur d'un camion portant la citerne 1. Il est placé sous le contrôle d'un organe de commande 10, tel qu'un vérin d'accélérateur, qui est contrôlé, ainsi qu'un by-pass 9 dont cette pompe est équipée, par un débit d'air en provenance d'une source 11. Ainsi qu'on le sait, ce by-pass est une valve qui contrôle la recirculation du fluide dans la pompe.

Sur la canalisation 3, de préférence juste en aval de la pompe, est localisé, avantageusement sur une portion en coude de cette canalisation, un régulateur de débit 12 selon l'invention qui est par ailleurs intercalé entre la source 11, et le by-pass 9 et l'organe de commande 10.

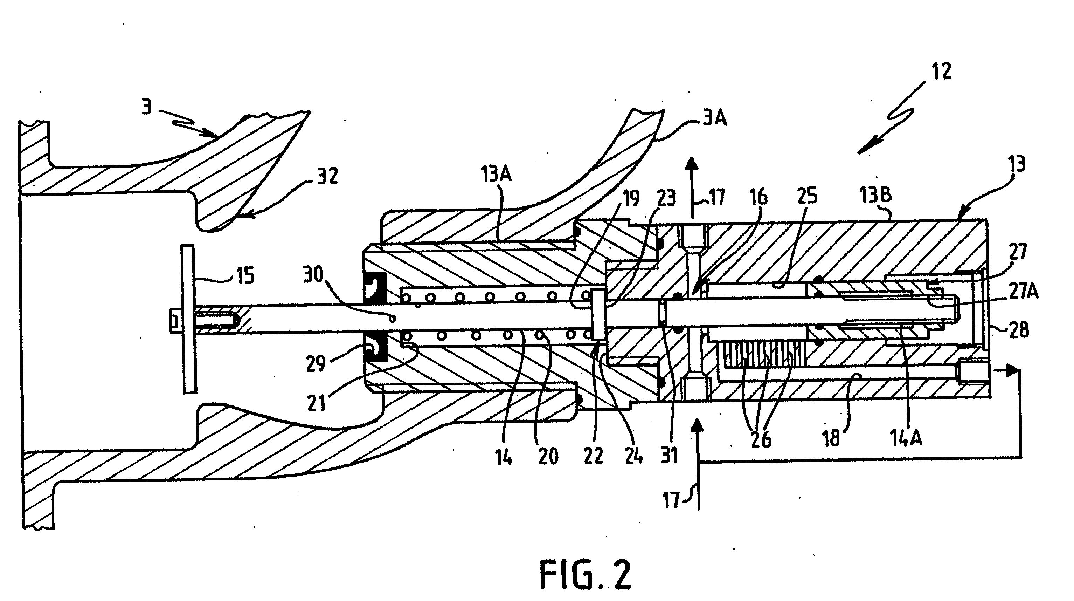

Ce régulateur de débit 12 est représenté à plus grande échelle à la figure 2.

Il comporte un corps 13 rendu solidaire de la portion en coude 3A de la canalisation 3. Dans ce corps est monté un arbre coulissant 14 comportant à une extrémité un disque 15 adapté à obturer au moins partiellement la section de passage du fluide au travers du coude 3A. Selon la position de l'arbre dans le corps, le disque 15 obture de façon variable la section d'écoulement du fluide dans ce coude.

Ce corps 13 comporte une chambre 16 (ou conduit de traversée d'air) traversée par la canalisation 17 reliant la source d'air 11 au by-pass 9 et au vérin 10, et d'où part un canal de fuite 18 adapté à ramener une portion de l'air incident vers la canalisation 17 en amont dudit corps 13. Cette chambre 16 est traversée par l'arbre coulissant 14 de telle sorte que la section d'écoulement de l'air ramené vers la canalisation 17 par le canal de dérivation 18 dépend de la position de l'arbre par rapport au corps 13.

Il s'établit ainsi une relation entre la section d'écoulement du fluide dans le coude 3A et la section d'écoulement de l'air dans le canal 18, et donc une relation entre le débit de fluide dans le coude 3A et le débit ou la pression d'air appliquée au by-pass 9 et au vérin 10. La configuration du coude 3A et du régulateur de débit 12 est telle que ces débits varient dans le même sens.

L'arbre coulissant 14 est soumis à une force de rappel qui tend à le ramener dans une configuration dans laquelle il empêche aussi peu que possible un échappement d'air par le canal 18.

Cet arbre comporte ainsi un épaulement 19 sur lequel s'applique un ressort 20 qui entoure l'arbre et prend appui à son autre extrémité sur un épaulement 21 du corps 13. Cet épaulement 19 est avantageusement prévu sur une bague 22 de cet arbre en sorte de ménager une butée 23 adaptée à venir s'appliquer contre une portée 24 du corps 13 en fin de course de l'arbre 14. L'engagement de cet arbre et de ce ressort dans le corps 13 nécessite que celui-ci soit en deux parties 13A et 13B portant respectivement les épaulements 21 et 24.

La chambre 16 comporte un alésage 25 d'où partent radialement des conduits 26 décalés axialement reliant cette chambre au canal 18. Sur l'arbre 14 est monté un manchon 27 coulissant de façon étanche dans l'alésage 25 et obturant un nombre variable de conduits 26. Ce manchon 27 est avantageusement réglable le long de l'arbre, à l'aide de portions filetées complémentaires 14A et 27A. Ce réglage peut être effectué sur place, après retrait temporaire d'un capuchon 28 obturant la partie arrière de l'alésage 25.

Divers organes d'étanchéité et de lubrification sont prévus le long de l'arbre coulissant 14. Ainsi un joint d'étanchéité à lèvres 29 est prévu à la partie avant du corps 13 pour empêcher la remontée du fluide circulant dans le coude 3A le long de l'arbre ; en vue d'assurer toutefois une auto-lubrification contrôlée, des cavités 30 en nombre approprié sont ménagées dans cet arbre à proximité du joint 29. De même, à des fins d'auto-lubrification contrôlée, une gorge 31 est évidée dans l'arbre en arrière de la bague 22 pour permettre un glissement aisé de l'arbre dans la partie 13B du corps 13. Diverses bagues d'étanchéité sont par ailleurs prévues entre le coude et le corps 13, entre les deux parties de ce dernier, et entre le manchon 27 et l'arbre et la partie 13B.

Dans l'exemple de la figure 2, le coude 3A est conformé en sorte de présenter un étranglement 32 au voisinage du disque 15.

En fonctionnement, tant que le pistolet 2 est fermé, il ne s'écoule que peu ou pas de fluide dans le coude 3A ; sous l'action du ressort 20, l'arbre 14 reste en position rétractée, et le manchon 27 n'obture aucun conduit 26 ; la pression appliquée au by-pass est alors minimale en raison de l'important débit d'air qui est dérivé par le canal 18. Le by-pass est ouvert, le moteur tourne au ralenti et la pompe ne délivre pas (ou peu) de débit.

Dès que l'on ouvre le pistolet, du fluide s'écoule ce qui se traduit par une dépression en aval du disque 15 ; cela provoque la sortie de l'arbre, et donc l'obturation progressive des conduits 26 par le manchon 27. La quantité d'air dérivée par le canal 18 est ainsi réduite, d'où une augmentation de la pression appliquée au by-pass et au vérin d'accélérateur. Il en résulte une accélération du moteur et la fermeture du by-pass, d'où une augmentation du débit fourni par la pompe, jusqu'à équilibrer la dépression subie par le disque 15 qui reste alors en une position d'équilibre pour laquelle la pompe fournit le débit demandé au pistolet. Il y a ainsi autorégulation du débit à un niveau quelconque.

Lorsque l'on relâche le pistolet, le phénomène inverse a lieu, avec ralentissement du moteur et ouverture du by-pass.

Un régulateur de débit selon l'invention peut être disposé dans une portion droite de canalisation, selon l'axe de cette portion, en étant entièrement inclus dans cette portion. L'arbre de ce régulateur peut par ailleurs être monté en sorte d'être, au repos, en configuration d'extension maximale, le disque de régulation étant alors disposé en amont par rapport au corps de régulateur.

## Revendications

1. Circuit de distribution de fluide à régulation de débit comportant une pompe (5) dont le régime est sensible à un écoulement de fluide de commande dans un moyen de réglage (9, 10) auquel parvient une canalisation de commande (17) pour l'amenée de ce fluide de commande, une canalisation (3, 7) de distribution de fluide partant de cette pompe vers un organe de distribution (2) et un régulateur de débit comportant dans un corps (13) solidaire d'un tronçon (3A) de cette canalisation de fluide en aval de cette pompe, un capteur mobile de débit (15) adapté à prendre une position variable en fonction du débit instantané de fluide dans ce tronçon, un conduit de traversée (16) faisant partie de cette canalisation de commande (17) en amont de cet organe de réglage, un canal de fuite (18) partant de ce conduit de traversée, et un organe mobile de régulation de fuite (27) attelé au capteur mobile de débit et adapté à ajuster la section de passage de fluide de commande dans ce canal de fuite à un niveau variable qui est fonction de la position variable de ce capteur de débit.

2. Circuit selon la revendication 1, caractérisé en ce que ce moyen de réglage comporte une valve de recirculation de fluide (9) dont est équipée cette pompe, et un organe d'accélération (10) commandant un moteur par lequel la pompe est entraînée, et le fluide de commande est de l'air.

3. Circuit selon la revendication 1 ou la revendication 2, caractérisé en ce que le capteur de débit (15) et l'organe de régulation de fuite (27) sont portés par un arbre coulissant (14) soumis à un organe de rappel (20) tendant à ramener ledit arbre dans une position correspondant à un débit minimal d'écoulement et à un débit maximal de fuite.

4. Circuit selon la revendication 3, caractérisé en ce que l'organe de rappel est un ressort (20) enroulé sur l'arbre et comprimé entre un épaulement (21) du corps (13A–13B) et une bague (22) solidaire dudit arbre, adaptée à venir en butée sur un autre épaulement (24) de ce corps.

5. Circuit selon l'une quelconque des revendications 1 à 4, caractérisé en ce que l'organe de régulation de fuite est un manchon (27) adapté à obturer un nombre variable de conduits (26) radiaux de communication entre le conduit de traversée (16) et le canal de fuite (18).

6. Circuit selon la revendication 5, caractérisé en ce que le manchon (27) est ajustable en position le long d'un arbre coulissant (14) relié au capteur de débit.

7. Circuit selon l'une quelconque des revendications 1 à 6, caractérisé en ce que le canal de fuite (18) est raccordé à la canalisation de commande en amont du conduit de traversée du régulateur de débit.

8. Circuit selon l'une quelconque des revendications 1 à 7, caractérisé en ce que le capteur de débit est un disque (15) disposé transversalement à l'écoulement du fluide dans ledit tronçon (3A).

9. Circuit selon la revendication 8, caractérisé en ce que ce disque disposé transversalement à l'écoulement de fluide dans ledit tronçon est adapté à s'écarter du corps (13) du régulateur de débit pour un débit croissant dans ce tronçon.

10. Circuit selon l'une quelconque des revendications 1 à 9, caractérisé en ce que ledit tronçon de canalisation (3A) est coudé.

## Patentansprüche

1. Durchflußregelbarer Fluidverteilungskreis mit einer Pumpe (5), deren Betriebszustand von einer Strömung eines Steuerfluids in einem Regelungsmittel (9, 10) abhängig ist, bei dem eine Steuerleitung (17) zur Zuführung dieses Steuerfluids ankommt, einer Leitung (3, 7) zur Verteilung des von der Pumpe abgehenden Fluids zu einer Verteilungseinrichtung (2) und einem Durchflußregler, der in einem Gehäuse (13) enthalten ist, das stromabwärts von der Pumpe mit einem Abschnitt (3A) der Leitung des Fluids fest verbunden ist, einem beweglichen Durchflußsensor (15), der zum Einnehmen einer variablen Position in Abhängigkeit vom momentanen Fluiddurchfluß in diesem Abschnitt ausgelegt ist, einer Durchgangsleitung (16), die oberhalb der Regelungseinrichtung einen Teil der Steuerleitung (17) bildet, einem von der Durchgangsleitung abgehenden Ableitungskanal (18) und einer beweglichen, an den beweglichen Durchflußsensor gekoppelten Ableitungsregulierungseinrichtung (27), die zum Einstellen des Durchlaßquerschnitts für das Steuerfluid in diesem Ableitungskanal auf ein variables Niveau ausgelegt ist, das abhängig von der variablen Position des Durchflußsensors ist.

2. Kreislauf nach Anspruch 1, dadurch gekennzeichnet, daß das Regelungsmittel ein in dieser Pumpe vorgesehenes Fluid-Rezirkulationsventil (9) und eine Beschleunigungseinrichtung (10) zur Steuerung eines Motors enthält, durch den die Pumpe angetrieben ist, und daß das Steuerfluid Luft ist.

3. Kreislauf nach Anspruch 1 oder 2, dadurch gekennzeichnet, daß der Durchflußsensor (15) und das Ableitungsregulierungsorgan (27) von einer verschiebbaren Welle (14) getragen sind, die von einer Rückstelleinrichtung (20) beaufschlagt ist, die der Welle eine Rückführtendenz in eine einem minimalen Strömungsdurchfluß und einem maximalen Ableitungsdurchfluß entsprechende Position verleiht.

4. Kreislauf nach Anspruch 3, dadurch gekennzeichnet, daß die Rückstelleinrichtung eine um die Welle gewickelte Feder (20) ist und zwischen einer Schulter (21) des Gehäuses (13A–13B) und einem mit der Welle fest verbundenen Ring (22) komprimiert ist, der so ausgebildet ist, daß er an einer anderen Schulter (24) des Gehäuses zur Anlage kommen kann.

5. Kreislauf nach einem der Ansprüche 1 bis 4, dadurch gekennzeichnet, daß die Ableitungsregulierungseinrichtung eine Hülse (27) ist, die zum Verschließen einer variablen Anzahl von Radialverbindungsleitungen (26) zwischen der Durchgangsleitung (16) und dem Ableitungskanal (18) ausgelegt ist.

6. Kreislauf nach Anspruch 5, dadurch gekennzeichnet, daß die Hülse (27) in einer Position in Längsrichtung einer verschiebbaren Welle (14) einstellbar ist, die mit dem Durchflußsensor verbunden ist.

7. Kreislauf nach einem der Ansprüche 1 bis 6, dadurch gekennzeichnet, daß der Ableitungskanal (18) stromaufwärts der Durchgangsleitung des Durchflußreglers an die Steuerleitung (17) angeschlossen ist.

8. Kreislauf nach einem der Ansprüche 1 bis 7, dadurch gekennzeichnet, daß der Durchflußsensor eine Scheibe (15) ist, die quer zu der Fluidströmung in dem Abschnitt (3A) angeordnet ist.

9. Kreislauf nach Anspruch 8, dadurch gekennzeichnet, daß die quer zu der Fluidströmung in dem Abschnitt angeordnete Scheibe dazu ausgelegt ist, sich für einen zunehmenden Durchfluß in dem Abschnitt von dem Gehäuse (13) des Durchflußreglers zu entfernen.

10. Kreislauf nach einem der Ansprüche 1 bis 9, dadurch gekennzeichnet, daß der Abschnitt (3A) der Leitung gekrümmt ist.

## Claims

1. Flow rate-regulating fluid-distribution circuit comprising a pump (5), the rate of which is sensitive to a flow of control fluid in a regulating means (9, 10) to which extends a control line (17) for supplying this control fluid, a fluid-distribution line (3, 7) leaving this pump towards a distribution member (2) and a flow-rate regulator comprising, in a body (13) integral with a section (3A) of this fluid line downstream from this pump, a movable flow-rate sensor (15) adapted so as to assume a position which can vary as a function of the fluid flow rate at any one time in this section, a through duct (16) forming part of this control line (17), upstream from this regulating member, an escape channel (18) leaving this through duct, and a movable espace-regulating member (27) connected to the movable flow-rate sensor and adapted so as to adjust the control fluid flow crosssection in this escape channel to a variable level which is a function of the variable position of the flow-rate sensor.

2. Circuit according to claim 1, characterized in that this adjusting means comprises a fluid-recirculating valve (9) with which this pump is equipped, and an acceleration member (10) controlling an engine by which the pump is driven, and the control fluid is air.

3. Circuit according to claim 1 or claim 2, characterized in that the flow-rate sensor (15) and the escape-regulating member (27) are carried by a sliding shaft (14) under the action of a return member (20) which tends to restore the said shaft to a position which corresponds to a minimum outflow flow-rate and a maximum escape flow-rate.

4. Circuit according to claim 3, characterized in that the return member is a spring (20) wound around the shaft and compressed between a shoulder (21) of the body (13A, 13B) and a ring (22) integral with the said shaft and is adapted so as to abut against another shoulder (24) of the body.

5. Circuit according to any one of claims 1 to 4, characterized in that the escape-regulating member is a sleeve (27) adapted so as to block off a variable number of radial ducts (26) for communication between the through duct (16) and the escape channel (18).

6. Circuit according to claim 5, characterized in that the position of the sleeve (27) can be adjusted along a sliding shaft (14) connected to the flow-rate sensor.

7. Circuit according to any one of claims 1 to 6, characterized in that the escape channel (18) is linked to the control line upstream from the through duct of the flow-rate regulator.

8. Circuit according to any one of claims 1 to 7, characterized in that the flow-rate sensor is a disc (15) arranged transversely to the flow of the fluid in the said section (3A).

9. Circuit according to claim 8, characterized in that the disc arranged transversely to the fluid flow in the said section is capable of moving away from the body (13) of the flow-rate regulator for an increasing flow rate in this section.

10. Circuit according to any one of claims 1 to 9, characterized in that the said line section (3A) is angled.

FIG.1

FIG.2